(19) Europäisches Patentamt
European Patent Office
Office européen des brevets

(11) **EP 4 699 982 A1**

(12) **EUROPEAN PATENT APPLICATION**
published in accordance with Art. 153(4) EPC

(43) Date of publication:
**25.02.2026 Bulletin 2026/09**

(21) Application number: **24792405.3**

(22) Date of filing: **18.03.2024**

(51) International Patent Classification (IPC):
**C01B 33/26** (2006.01)     **H01M 4/525** (2010.01)

(52) Cooperative Patent Classification (CPC):
Y02E 60/10

(86) International application number:
**PCT/JP2024/010408**

(87) International publication number:
**WO 2024/219129 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023 JP 2023067359**

(71) Applicant: **SUMITOMO Metal Mining Co., Ltd. Tokyo 105-8716 (JP)**

(72) Inventor: **IWASAKI Kentaro Niihama-shi, Ehime 792-8521 (JP)**

(74) Representative: **Vossius & Partner Patentanwälte Rechtsanwälte mbB Siebertstrasse 3 81675 München (DE)**

(54) **LITHIUM-METAL COMPLEX OXIDE, POSITIVE ELECTRODE ACTIVE MATERIAL FOR LITHIUM SECONDARY BATTERY, POSITIVE ELECTRODE FOR LITHIUM SECONDARY BATTERY, AND LITHIUM SECONDARY BATTERY**

(57) A lithium metal composite oxide having a layered structure, and satisfying (1) and (2) shown below. (1) The lithium metal composite oxide contains Co, an element M1 and an element M2, wherein the molar ratio of the element M1 relative to Co is at least 0.05 but not more than 6, the element M1 is one or more elements selected from the group consisting of Si, Ca and Na, and the element M2 is one or more elements selected from the group consisting of Fe and Mg. (2) In X-ray diffraction measurements using CuKα radiation, two diffraction peaks exist within a range of $2\theta = 38.0 \pm 0.5°$, and of those two peaks, if the diffraction peak on the lower angle side is deemed peak A and the diffraction peak on the higher angle side is deemed peak B, then the following formula is satisfied: $0.50 \leq I_A/I_B \leq 0.75$ (wherein $I_A$ represents the peak area of the peak A, and $I_B$ represents the peak area of the peak B).

FIG. 1

EP 4 699 982 A1

**Description**

[Technical Field]

The present invention relates to a lithium metal composite oxide, a cathode active material for a lithium secondary battery, a cathode for a lithium secondary battery, and a lithium secondary battery.
Priority is claimed on Japanese Patent Application No. 2023-067359, filed April 17, 2023, the content of which is incorporated herein by reference.

[Background Art]

Lithium metal composite oxides are used as the cathode active material for lithium secondary batteries. The characteristics of the lithium metal composite oxide affect the characteristics of the lithium secondary battery. Accordingly, the development of lithium metal composite oxides aimed at improving the characteristics of lithium secondary batteries is being actively pursued.
For example, Patent Document 1 discloses that a lithium metal composite oxide for which the diffraction peak intensity ratio I(006)/I(102) between the (006) plane and the (102) plane in the X-ray diffraction Miller indices hkl is not more than 0.44, and which also satisfies certain other physical properties, exhibits improvements in the charge/discharge capacities and the rate characteristics for lithium secondary batteries.

[Citation List]

[Patent Document]

[Patent Document 1] JP-A-2013-112531

[Summary of Invention]

[Technical Problem]

As the potential fields of application for lithium secondary batteries expand, further improvements in the cycle characteristics would be desirable.
The present invention has an object of obtaining a lithium metal composite oxide that can provide a lithium secondary battery having superior cycle characteristics.
The present invention also has the objects of providing a cathode active material for a lithium secondary battery, a cathode for a lithium secondary battery, and a lithium secondary battery that each contain the above lithium metal composite oxide.

[Solution to Problem]

The present invention includes the following [1] to [11].

[1] A lithium metal composite oxide having a layered structure, and satisfying (1) and (2) shown below.

(1) The composite oxide contains Co, an element M1 and an element M2, wherein the molar ratio of the element M1 relative to Co is at least 0.05 but not more than 6, the element M1 is one or more elements selected from the group consisting of Si, Ca and Na, and the element M2 is one or more elements selected from the group consisting of Fe and Mg.
(2) In powder X-ray diffraction measurements using CuK$\alpha$ radiation, two diffraction peaks exist within a range of $2\theta = 38.0 \pm 0.5°$, and of those two peaks, if the diffraction peak on the lower angle side is deemed peak A and the diffraction peak on the higher angle side is deemed peak B, then the following formula is satisfied:

$$0.50 \leq I_A/I_B \leq 0.75 \qquad \ldots \text{Formula}$$

(wherein $I_A$ represents the peak area of the peak A, and $I_B$ represents the peak area of the peak B).

[2] The lithium metal composite oxide according to [1], wherein the total mass of Co, the element M1 and the element M2 contained in the lithium metal composite oxide is not more than 12,000 ppm.

[3] The lithium metal composite oxide according to [1] or [2], wherein the element M1 includes Ca and Si, and the molar ratio of Si relative to Ca is 8 or greater.

[4] The lithium metal composite oxide according to any one of [1] to [3], wherein the element M1 includes Na and Si, and the molar ratio of Si relative to Na is 0.5 or greater.

[5] The lithium metal composite oxide according to any one of [1] to [4], wherein the BET specific surface area is at least 1.0 $m^2$/g but not more than 2.0 $m^2$/g.

[6] The lithium metal composite oxide according to any one of [1] to [5], wherein $D_{10}$, $D_{50}$ and $D_{90}$ satisfy formula (1) shown below:

$$0.5 \leq (D_{90}\text{-}D_{10})/D_{50} \leq 1.5 \qquad \text{Formula (I)}$$

(wherein $D_{10}$ represents the 10% cumulative volume particle size of the lithium metal composite oxide, $D_{50}$ represents the 50% cumulative volume particle size of the lithium metal composite oxide, and $D_{90}$ represents the 90% cumulative volume particle size of the lithium metal composite oxide).

[7] The lithium metal composite oxide according to any one of [1] to [6], wherein the average particle strength of the lithium metal composite oxide is 20 MPa or greater.

[8] The lithium metal composite oxide according to any one of [1] to [7], wherein the standard deviation in the particle strength of the lithium metal composite oxide is not more than 40%.

[9] A cathode active material for a lithium secondary battery containing the lithium metal composite oxide according to any one of [1] to [8].

[10] A cathode for a lithium secondary battery containing the cathode active material for a lithium secondary battery according to [9].

[11] A lithium secondary battery having the cathode for a lithium secondary battery according to [10].

[Advantageous Effects of Invention]

By using the present invention, a lithium metal composite oxide can be obtained that can provide a lithium secondary battery having superior cycle characteristics. Moreover, the present invention can also provide a cathode active material for a lithium secondary battery, a cathode for a lithium secondary battery, and a lithium secondary battery that each contain this type of lithium metal composite oxide.

[Brief Description of Drawings]

FIG. 1 is a schematic diagram illustrating one example of a lithium secondary battery.
FIG. 2 is a schematic diagram illustrating one example of an all-solid-state lithium secondary battery.

[Description of Embodiments]

In this description, a metal composite compound may also be abbreviated as "MCC", a lithium metal composite oxide may be abbreviated as "LiMO", and a cathode active material for a lithium secondary battery may be abbreviated as "CAM". A lithium secondary battery means a battery having an electrolyte (such as a nonaqueous electrolyte or a solid electrolyte) disposed between the cathode and the anode, wherein movement of lithium ions through the electrolyte between the cathode and the anode enables charging and discharging to occur.

The term "Ni" indicates not standalone nickel metal, but rather a Ni atom. Similarly, "Co" and "Li" and the like indicate a cobalt atom and a lithium atom respectively.

A numerical range described, for example, as "1-10 $\mu$m" or "1 to 10 $\mu$m" means a numerical range from 1 $\mu$m to 10 $\mu$m, including the lower limit value of 1 $\mu$m and the upper limit value of 10 $\mu$m.

For numerical ranges in this description, the lower limit value and upper limit value may be combined as appropriate.

Numerical ranges for the various physical properties, compositions, and production conditions may also be combined as appropriate.

[Method for Measuring Cycle Retention Rate]

In this description, the expression "superior cycle characteristics" means that for a lithium secondary battery produced using the method described below, the value for the cycle retention rate measured as described below is 80% or higher.

(Production of Cathode for Lithium Secondary Battery)

Using the LiMO as the CAM, the CAM, a conductive material (acetylene black) and a binder (PVdF) are kneaded together in a mass ratio of CAM : conductive material : binder = 92:5:3 (mass ratio) to prepare a paste-like cathode mixture. During preparation of this cathode mixture, N-methyl-2-pyrrolidone is used as an organic solvent.

The thus obtained cathode mixture is applied to a current collector formed from an Al foil with a thickness of 40 $\mu$m and then dried under vacuum at 150°C for 8 hours to obtain a cathode for a lithium secondary battery. The surface area of this cathode for a lithium secondary battery is 1.65 cm$^2$.

(Production of Lithium Secondary Battery)

The operations below are conducted in a glovebox under an argon atmosphere.

The cathode for a lithium secondary battery produced as described above is placed within the lower lid of a part for a coin-shaped battery R2032 (manufactured by Hohsen Corporation) with the aluminum foil surface facing downward, and a separator (thickness: 25 $\mu$m) composed of a porous film of polypropylene is then placed on top of the cathode. Next, 300 $\mu$l of an electrolyte solution is injected into the lower lid. The electrolyte solution used is a solution prepared by dissolving 1 mol/l of $LiPF_6$ in a mixed solution containing ethylene carbonate, dimethyl carbonate and ethyl methyl carbonate in a ratio of 30:35:35 (volumetric ratio).

Next, using metallic lithium as the anode, the anode is placed on top of the separator, the upper lid is fitted via a gasket, and the assembly is sealed with a caulking machine to complete production of the lithium secondary battery (coin half cell R2032).

The assembled lithium secondary battery is left to stand at room temperature for 12 hours to allow the electrolyte solution to adequately impregnate the separator and the cathode active material layer.

At a test temperature of 25°C, and using a set current of 0.2 CA for both charging and discharging, constant current constant voltage charging and constant current discharging are conducted. The maximum charge voltage is set to 4.3 V, and the minimum discharge voltage is set to 2.5 V.

Subsequently, at a test temperature of 25°C, constant current constant voltage charging and constant current discharging are repeated under the conditions described below. Fifty repetitions of the charge/discharge cycle are conducted.

Charging: current setting: 1 CA, maximum voltage: 4.3 V, constant voltage constant current charging
Discharging: battery setting 1 CA, minimum voltage: 2.5 V, constant current discharging

Based on the discharge capacity of the first cycle and the discharge capacity of the 50th cycle, the cycle retention rate is calculated using the formula shown below. A higher cycle retention rate means better suppression of any decrease in the capacity of the battery following repeated charging and discharging, indicating superior cycle characteristics.

Cycle retention rate (%) = discharge capacity of 50th cycle (mAh/g) / discharge capacity of 1st cycle (mAh/g) $\times$ 100

<Lithium Metal Composite Oxide>

The crystal structure of LiMO of an embodiment of the present invention is a layered structure, and is preferably a hexagonal crystal structure or a monoclinic crystal structure.

Hexagonal crystal structures belong to one space group selected from the group consisting of P3, $P3_1$, $P3_2$, R3, P-3, R-3, P312, P321, $P3_1$12, $P3_1$21, $P3_2$12, $P3_2$21, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm and $P6_3$/mmc.

Further, monoclinic crystal structures belong to one space group selected from the group consisting of P2, $P2_1$, C2, Pm, Pc, Cm, Cc, P2/m, $P2_1$/m, C2/m, P2/c, $P2_1$/c and C2/c.

From the viewpoint of obtaining a lithium secondary battery having superior cycle characteristics, the LiMO crystal structure is preferably a hexagonal crystal structure belonging to the space group R-3m, or a monoclinic crystal structure belonging to the space group C2/m.

[Method for Confirming Crystal Structure]

The crystal structure of the LiMO can be confirmed by observation using a powder X-ray diffraction measurement device (for example, an Ultima IV device, manufactured by Rigaku Corporation).

Moreover, the LiMO satisfies (1) and (2) described below.

(1)
The LiMO contains Co, an element M1 and an element M2, wherein M1 is one or more elements selected from the group consisting of Si, Ca and Na, and the element M2 is one or more elements selected from the group consisting of Fe and Mg.

In the LiMO, the molar ratio of the element M1 relative to Co, namely the value of M1/Co as a molar ratio, is at within a range from 0.05 to 6.

The value of M1/Co is preferably at least 0.06, and more preferably greater than 0.07. Further, M1/Co is preferably not more than 5.5, more preferably not more than 5.0, and even more preferably 4.5 or less. For example, M1/Co may be within a range from 0.05 to 5.5, from 0.06 to 5.0, from 0.06 to 4.5, or greater than 0.07 but not more than 4.5.

During operation of the lithium secondary battery, lithium ions diffuse between the layers inside the crystals of the LiMO and move toward the interface with the electrolyte. The more smoothly the lithium ions are able to diffuse through the interior of the crystals of the LiMO, the less likely the cycle characteristics are to deteriorate, enabling a lithium secondary battery of longer lifespan to be obtained. In other words, by controlling the LiMO crystal structure to obtain a structure that facilitates diffusion of lithium ions, the cycle characteristics of the lithium secondary battery can be more easily improved.

One technique for controlling the LiMO crystal structure involves controlling the degree of sintering of the calcined product obtained in the calcining step.

Specifically, by controlling the degree of sintering in the step of mixing and calcining the lithium compound and the MCC containing Co and the element M1, the degree of development of the LiMO layered structure can be controlled.

After various investigations, the inventors of the present invention discovered that by using a LiMO that satisfies the above condition (1), the cycle characteristics of the lithium secondary battery could be improved. It is thought that this is because a layered structure that enables smooth lithium ion diffusion is more easily formed.

The total mass of Co, the element M1 and the element M2 contained in the LiMO is preferably not more than 12,000 ppm, more preferably not more than 10,000 ppm, even more preferably not more than 8,000 ppm, and particularly preferably 6,100 ppm or less.

The lower limit for the total mass of Co, the element M1 and the element M2 contained in the LiMO is preferably at least 10 ppm, more preferably at least 50 ppm, even more preferably at least 100 ppm, and particularly preferably 580 ppm or greater.

From viewpoints including environmental regulations and achieving stable mass production, the amount of the rare metal Co is preferably small. The element M1 acts on sites occupied by Li and contributes to diffusion of the lithium ions, whereas the element M2 acts on the main metal elements (such as Ni and Mn) constituting the LiMO and contributes to development of the layered structure.

If the element M1 is present in excess, it can hinder the diffusion of lithium ions, whereas if the element M2 is present in excess, it can hinder development of the layered structure.

Accordingly, in addition to the cycle characteristics, from the viewpoint of enabling stable supply of the lithium secondary battery, the total amount of Co, the element M1 and the element M2 contained in the LiMO is preferably not more than the above upper limit.

The total mass of Co, the element M1 and the element M2 contained in the LiMO is, for example, within a range from 10 to 12,000 ppm, from 50 to 10,000 ppm, from 100 to 8,000 ppm, or from 580 to 6,100 ppm. These values are expressed relative to a value of 100% by mass for the total mass of all metal elements besides Li in the LiMO.

The element M1 may be one or more elements selected from the group consisting of Si, Ca and Na, and in the case of two or more elements, there are no particular limitations on the combination of elements. Further, the element M1 may include all of Si, Ca and Na.

In those cases where the element M1 includes Ca and Si, the molar ratio of Si relative to Ca (Si/Ca) is preferably at least 8, more preferably at least 8.5, and even more preferably 9 or greater.

Further, Si/Ca is preferably not more than 100, more preferably not more than 90, even more preferably not more than 85, and particularly preferably 80 or less.

Si/Ca is, for example, within a range from 8 to 100, from 8.5 to 90, from 9 to 85, or from 8 to 80. Provided the value of Si/Ca falls within the above range, the cycle characteristics can be improved.

In those cases where the element M1 includes Na and Si, the molar ratio of Si relative to Na (Si/Na) is preferably at least 0.5, more preferably at least 0.6, and even more preferably 0.7 or greater.

Further, Si/Na is preferably not more than 10, more preferably not more than 9, and even more preferably 8 or less.

Si/Na is, for example, within a range from 0.5 to 10, from 0.6 to 9, or from 0.7 to 8. Provided the value of Si/Na falls within the above range, the cycle characteristics can be improved.

The LiMO also contains Li in addition to Co, the element M1 and the element M2. Further, the LiMO preferably also contains at least one element M0 selected from the group consisting of Ni, Mn and Al.

(Compositional Formula)

In order to further improve the cycle characteristics, the LiMO described above is preferably represented by the compositional formula (A) shown below.

$$\text{Li}_x\text{Ni}_y\text{Co}_z\text{M0}_s\text{M1}_t\text{M2}_u\text{O}_2 \text{ ...} \qquad (A)$$

(In formula (A), $0.80 \leq x \leq 1.20$, $0.70 \leq y \leq 0.98$, $0 \leq s < 0.30$, $0 < z+t+u \leq 0.02$, and $y+z+s+t+u=1$, M0 represents the above element M0, M1 represents the above element M1, and M2 represents the above element M2.)

The value of x is preferably at least 0.81, and more preferably 0.82 or greater. Further, x is preferably not more than 1.19, and more preferably 1.18 or less. For example, x may be within a range from 0.81 to 1.19, or from 0.82 to 1.18.

The value of y is preferably at least 0.71, more preferably at least 0.72, and even more preferably 0.80 or greater. Further, y is preferably not more than 0.95, more preferably not more than 0.94, and even more preferably 0.93 or less. For example, y may be within a range from 0.71 to 0.95, from 0.72 to 0.94, or from 0.80 to 0.93.

In those cases where the LiMO contains the element M0, s is preferably not more than 0.28, more preferably not more than 0.20, even more preferably not more than 0.10, and particularly preferably 0.09 or less. For example, s may be greater than 0 but not more than 0.28, greater than 0 but not more than 0.2, greater than 0 but not more than 0.1, or greater than 0 but not more than 0.09.

The value of z+t+u is preferably not more than 0.015. Further, z+t+u is preferably at least 0.0003, and more preferably 0.0005 or greater. For example, z+t+u may be within a range from 0.0003 to 0.02, or from 0.0005 to 0.015.

[Compositional Analysis]

Compositional analysis of the LiMO can be conducted by dissolving the LiMO powder in hydrochloric acid, and then conducting measurements using an ICP emission spectrophotometer.

For example, an Optima 7300 apparatus manufactured by PerkinElmer, Inc. can be used as the ICP emission spectrophotometer.

(2)

In powder X-ray diffraction measurements of the LiMO using CuK$\alpha$ radiation, two diffraction peaks exist within a range of $2\theta$ = $38.0 \pm 0.5°$, and of those two peaks, if the diffraction peak on the lower angle side is deemed peak A and the diffraction peak on the higher angle side is deemed peak B, then the LiMO satisfies the following formula.

$$0.50 \leq I_A/I_B \leq 0.75 \qquad \text{... Formula}$$

($I_A$ represents the peak area of the peak A, and $I_B$ represents the peak area of the peak B.)

The value of $I_A/I_B$ is preferably at least 0.52, and more preferably 0.53 or greater. Further, $I_A/I_B$ is preferably not more than 0.74, and more preferably 0.73 or less.

$I_A/I_B$ more preferably satisfies formula (B) or formula (C) shown below.

$$0.52 \leq I_A/I_B \leq 0.74 \qquad \text{... Formula (B)}$$

$$0.53 \leq I_A/I_B \leq 0.73 \qquad \text{... Formula (C)}$$

Strain in the crystal structure tends to hinder smooth diffusion of the lithium ions. By resolving strain in the crystal structure, the cycle characteristics can be further improved.

In addition, if the crystal planes where entry and exit of the lithium ions occur favorably are exposed to the electrolyte, then the cycle characteristics are less likely to degrade.

After various investigations, the inventors of the present invention discovered that by using a LiMO that satisfies the above condition (2) in addition to the above condition (1), the cycle characteristics of the lithium secondary battery could be improved. It is thought that this is because strain in the LiMO crystal structure is resolved, and the crystal planes where entry and exit of the lithium ions occur favorably are exposed to the electrolyte.

[Method for Acquiring $I_A/I_B$]

Powder X-ray diffraction measurements of the LiMO are conducted using a powder X-ray diffraction apparatus. For example, a LINT 2000 device manufactured by Rigaku Corporation can be used as the powder X-ray diffraction apparatus.

Specifically, the LiMO powder is packed in a special substrate, and a Cu-K$\alpha$ radiation source is used to conduct measurements under conditions including a diffraction angle $2\theta = 10°$ to $90°$, a sampling width of $0.02°$ and a scan speed of $4°$/min, thus obtaining a powder X-ray diffraction pattern.

Using integrated powder X-ray analysis software, two diffraction peaks are specified from the obtained powder X-ray diffraction pattern within the range of $2\theta = 38.0 \pm 0.5°$. The two peaks selected represent the peak having the largest peak intensity and the peak having the second largest peak intensity. Of these two specified peaks, the diffraction peak on the lower angle side is deemed peak A and the diffraction peak on the higher angle side is deemed peak B.

Subsequently, the peak area $I_A$ of the peak A and the peak area $I_B$ of the peak B are determined.

Specifically, the region enclosed by the peak curve from the peak start to the peak end, and the baseline is calculated as the peak area.

In this description, the peak start is the rise point of the peak following peak resolution, and means the point of tangency between the peak and the baseline.

Similarly, in this description, the peak end is the end point of the peak following peak resolution, and means the point of tangency between the peak and the baseline.

The peak areas can be calculated automatically using integrated powder X-ray analysis software. For example, JADE produced by Materials Data, Inc. can be used as the integrated powder X-ray analysis software.

The BET specific surface area of the LiMO is preferably at least 1.0 m²/g, more preferably at least 1.1 m²/g, and even more preferably 1.2 m²/g or greater. The BET specific surface area is preferably not more than 2.0 m²/g, more preferably not more than 1.8 m²/g, and even more preferably 1.7 m²/g or less. The BET specific surface area is, for example, within a range from 1.0 to 2.0 m²/g, from 1.1 to 1.8 m²/g, or from 1.2 to 1.7 m²/g.

By using a LiMO having a BET specific surface area that is at least as high as the above lower limit, the LiMO reaction interface increases, facilitating the entry and exit of lithium ions, and the cycle characteristics are less likely to deteriorate.

By using a LiMO having a BET specific surface area that is not more than the above upper limit, the contact area between the LiMO and the electrolyte solution is less likely to increase, and coating film formation caused by degradation of the electrolyte solution is less likely. If this type of coating film is minimized, then lithium ion conductivity is less likely to be impaired, meaning the cycle characteristics are less likely to deteriorate.

[Measurement of BET Specific Surface Area]

The BET specific surface area of the LiMO can be measured using a BET specific surface area measurement device. For example, a Macsorb (a registered trademark) device manufactured by Mountech Co., Ltd. can be used as the BET specific surface area measurement device. In the case of measurement of a powdered LiMO, the LiMO is preferably dried at 105°C for 30 minutes in a nitrogen atmosphere as a pretreatment prior to measurement.

The values of $D_{10}$, $D_{50}$ and $D_{90}$ for the LiMO preferably satisfy formula (I) shown below:

$$0.5 \leq (D_{90}\text{-}D_{10})/D_{50} \leq 1.5 \qquad \text{Formula (I)}$$

(wherein $D_{10}$ represents the 10% cumulative volume particle size of the LiMO, $D_{50}$ represents the 50% cumulative volume particle size of the LiMO, and $D_{90}$ represents the 90% cumulative volume particle size of the LiMO).

A LiMO that satisfies the above formula (I) can be ideally packed in powder form into a crucible or a case, and because sintering can proceed readily, crystal growth is easily promoted. As a result, the cycle characteristics can be easily improved.

The value of $(D_{90}\text{-}D_{10})/D_{50}$ is preferably at least 0.6, and more preferably 0.8 or greater. Further, $(D_{90}\text{-}D_{10})/D_{50}$ is preferably not more than 1.4. For example, the value of $(D_{90}\text{-}D_{10})/D_{50}$ may be within a range from 0.6 to 1.5, from 0.6 to 1.4, or from 0.8 to 1.4.

The value of $D_{50}$ is preferably at least 8 μm, and more preferably 10 μm or greater. Further, $D_{50}$ is preferably not more than 25 μm, and more preferably 20 μm or less. For example, $D_{50}$ may be within a range from 8 to 25 μm, or from 10 to 20 μm. A LiMO having a $D_{50}$ value that satisfies the above range exhibits ideal packing of the LiMO particles when the LiMO is mixed into layers together with a conductive material and a binder. As a result, during operation of the lithium secondary battery, the lithium ions can move efficiently through the electrode mixture layers, making it easier to improve the cycle characteristics.

[Measurement of $D_{10}$, $D_{90}$ and $D_{50}$]

The values of $D_{10}$ ($\mu$m), $D_{50}$ ($\mu$m) and $D_{90}$ ($\mu$m) for the LiMO can be measured using the dry method described below.

Specifically, first, using 2 g of the LiMO, the dry particle size distribution is measured using a laser diffraction particle size distribution analyzer, thus obtaining a volume-based cumulative particle size distribution curve. In this obtained cumulative particle size distribution curve, the particle size values at the point where the cumulative volume reaches 10%, 50% and 90% from the fine particle side represent $D_{10}$, $D_{50}$ and $D_{90}$ respectively.

For example, an MS2000 analyzer manufactured by Malvern Instruments Inc. can be used as the laser diffraction particle size distribution analyzer.

The average particle strength of the LiMO is preferably at least 20 MPa, more preferably at least 21 MPa, and even more preferably 25 MPa or greater.

The average particle strength of the LiMO is preferably not more than 60 MPa, more preferably not more than 55 MPa, and even more preferably 50 MPa or less.

The average particle strength of the LiMO is, for example, within a range from 20 to 60 MPa, from 21 to 55 MPa, or from 25 to 50 MPa.

By using a LiMO having an average particle strength within the above range, particles of the LiMO are less likely to rupture during battery operation. As a result, cracks that can cause resistance are less likely to form, and the cycle characteristics are less likely to degrade.

[Method for Measuring Average Particle Strength]

The average particle strength of the LiMO is measured using the method described below.

First, three or more LiMO particles having a size of about $D_{50} \pm 2$ $\mu$m are selected. The $D_{50}$ value is measured using the method described above in the section entitled [Measurement of $D_{10}$, $D_{90}$ and $D_{50}$]. When selecting the particles, particles having an extremely irregular shape are avoided. Specifically, particles having a ratio between the minor axis and major axis of the particle (minor axis/major axis) of 0.7 to 1.3 are selected.

The term "major axis" means the longest diameter across the particle. The term "minor axis" means the shortest diameter across the particle. Next, one of the selected LiMO particles is subjected to a test pressure (load), and the displacement in the LiMO particle is measured.

Measurement is conducted using a Micro Compression Tester MCT-510 manufactured by Shimadzu Corporation.

The three or more selected particles are placed statically on the tester, the test pressure is gradually increased, and the pressure value which yields the maximum amount of displacement with the test pressure substantially constant is deemed the test pressure (P) (units: MPa).

Based on this obtained test pressure (P), the crushing strength (St) (units: MPa) is calculated using the following formula (X) shown below (see Journal of the Mining Industry of Japan, Vol. 81, (1965)). This operation is repeated a total of seven times, and the average value of the five repetitions excluding the maximum and minimum values for the crushing strength is calculated as the average particle strength. In the following formula (X), d represents the LiMO secondary particle diameter (units: $\mu$m).

$$St = 2.8 \times P/(\pi \times d \times d) \qquad ... \text{ Formula (X)}$$

The standard deviation in the LiMO particle strength is preferably not more than 40%, more preferably not more than 30%, and even more preferably 25% or less. Further, the standard deviation is preferably at least 3%, more preferably at least 5%, and even more preferably 10% or greater. The standard deviation is preferably within a range from 3 to 40%, more preferably from 5 to 30%, and even more preferably from 10 to 25%.

By producing the cathode active material layer using a LiMO having a standard deviation that satisfies the above range, the variation in the particle strength within the cathode active material layer is small, and the interior of the layer has a substantially uniform state. As a result, during operation of the lithium secondary battery, the LiMO particles are less likely to rupture, and the cycle characteristics are less likely to degrade.

[Method for Measuring Standard Deviation in Particle Strength]

The standard deviation in the particle strength is determined using the particle strength values and the value for the average particle strength obtained in the above section entitled [Method for Measuring Average Particle Strength]. Specifically, the squares of the differences between the particle strength for each data value and the average particle strength are totaled, and the positive square root of the value obtained by dividing the thus obtained total by the total number of data values is deemed the particle strength standard deviation.

<<Method for Producing LiMO>>

The method for producing the LiMO includes a step of obtaining an MCC, and a step of obtaining the LiMO. The step of obtaining an MCC and the step of obtaining the LiMO are described below in this order.

[Step of Obtaining MCC]

The MCC contains Co, the element M1 and the element M2. The expression that the MCC contains Co, the element M1 and the element M2 includes both states in which the Co, the element M1 and the element M2 exist within the crystals of the MCC, and states in which the Co, the element M1 and the element M2 exist around the periphery of the MCC. The MCC preferably also contains Ni and the element M0 described above.
Examples of the MCC include metal composite hydroxides and metal composite oxides containing these elements, or mixtures of such metal composite hydroxides and metal composite oxides.
The MCC can be produced by a conventional batch co-precipitation method or continuous co-precipitation method. The production method is described below in detail using, as an example, a MCC containing Ni, the element M0, Co, the element M1 and the element M2.
First, a nickel salt solution, a metal salt solution of the element M0, a cobalt salt solution, metal salt solution of the element M1, a metal salt solution of the element M2, and an optional complexing agent are mixed using a coprecipitation method, in particular the continuous coprecipitation method disclosed in JP-A-2002-201028, thus producing a metal composite hydroxide.
There are no particular limitations on the nickel salt as the solute of the nickel salt solution, and for example, at least one salt from among nickel sulfate, nickel nitrate, nickel chloride and nickel acetate may be used.
Examples of metal salts of the element M0 that may be used as the solute of the metal salt solution of the element M0 include at least one salt from among manganese sulfate, manganese nitrate, manganese chloride, manganese acetate, aluminum sulfate, and sodium aluminate.
The nickel salt solution and the metal salt solution of the element M0 are used in proportions corresponding with the desired LiMO compositional ratio (for example, the compositional formula (A)).
The nickel salt solution and the metal salt solution of the element M0 are supplied to the reaction vessel and mixed, yielding a raw material solution.
Next, the cobalt salt solution, the metal salt solution of the element M1, and the metal salt solution of the element M2 are added to the raw material solution in the reaction vessel to obtain a mixed raw material solution.
Examples of cobalt salts that may be used as the solute of the cobalt salt solution include at least one salt from among cobalt sulfate, cobalt nitrate, cobalt chloride and cobalt acetate.
Examples of metal salts of the element M1 that may be used as the solute of the metal salt solution of the element M1 include at least one salt from among calcium sulfate, calcium nitrate, calcium chloride, calcium acetate, calcium carbonate, calcium oxide and calcium hydroxide in the case where the element M1 is Ca, at least one salt from among silicon dioxide, sodium silicate and aluminum silicate in the case where the element M1 is Si, or at least one salt from among sodium sulfate, sodium nitrate, sodium chloride, sodium acetate, sodium carbonate, sodium oxide, sodium hydroxide and sodium silicate in the case where the element M1 is Na.
Examples of metal salts of the element M2 that may be used as the solute of the metal salt solution of the element M2 include at least one salt from among iron (II) sulfate, iron (III) sulfate, iron (II) nitrate, iron (III) nitrate, iron (II) chloride, iron (III) chloride, iron (II) acetate, iron (II) oxide, iron (III) oxide, iron (II) hydroxide and iron (III) hydroxide in the case where the element M2 is Fe, or at least one salt from among magnesium sulfate, magnesium nitrate, magnesium chloride, magnesium acetate, magnesium carbonate, calcium oxide and magnesium hydroxide in the case where the element M2 is Mg.
The cobalt salt solution, the metal salt solution of the element M1, and the metal salt solution of the element M2 are added in amounts that yield a M1/Co ratio within a range from 0.05 to 6. This yields a LiMO that satisfies the above condition (1).
The amounts added of the cobalt salt solution, the metal salt solution of the element M1, and the metal salt solution of the element M2 are preferably amounts that ensure that the total mass of Co, the element M1 and the element M2 contained in the desired LiMO is not more than 12,000 ppm.
The solvent used for the nickel salt solution, the metal salt solution of the element M0, the cobalt salt solution, the metal salt solution of the element M1, and the metal salt solution of the element M2 is, for example, water.
The complexing agent is a compound that is capable of forming a complex with Ni and ions of the element M0 in an aqueous solution. Examples of the complexing agent include ammonium ion donors, hydrazine, ethylenediaminetetraacetic acid, nitrilotriacetic acid, uracildiacetic acid, and glycine.

Examples of the ammonium ion donors include ammonium salts such as ammonium hydroxide, ammonium sulfate, ammonium chloride, ammonium carbonate and ammonium fluoride.

A complexing agent need not be included. In those cases where a complexing agent is included, the amount of the complexing agent included in the mixed solution containing the above mixed raw material solution and the complexing agent, for example, expressed as a molar ratio of the amount of the complexing agent relative to the total number of moles of the nickel salt, the metal salt of the element M0, the cobalt salt, the metal salt of the element M1 and the metal salt of the element M2 contained in the mixed solution, is greater than 0 but not more than 2.

During the co-precipitation method, in order to adjust the pH value of the above mixed solution, an alkaline aqueous solution is added to the mixed solution before the pH of the mixed solution changes from alkaline to neutral. Examples of alkaline aqueous solutions that may be used include a sodium hydroxide aqueous solution or a potassium hydroxide aqueous solution.

In this description, the pH value is defined as the value measured when the temperature of the mixed solution is 40°C. In those cases where the temperature of the mixed solution sampled from the reaction vessel is not 40°C, the pH is measured following heating or cooling of the mixed solution to 40°C.

During the reaction, the temperature of the reaction vessel is controlled, for example, within a range from 20 to 80°C, and preferably from 30 to 70°C.

Further, during the reaction, the pH value inside the reaction vessel is controlled, for example, within a range from 9 to 13, and preferably from 11 to 13.

The materials inside the reaction vessel are stirred appropriately and mixed.

In order to enable separation of the formed reaction precipitate, an overflow type reaction vessel may be used as the reaction vessel used in the continuous coprecipitation method.

An inert gas such as nitrogen, argon or carbon dioxide, an oxidizing gas such as air or oxygen, or a mixed gas of these gases may be supplied to the reaction vessel.

In order to achieve the desired atmosphere inside the reaction vessel, the prescribed gas may be passed through the reaction vessel or bubbled directly through the reaction solution.

Following the above reaction, the obtained reaction precipitate is washed with water and then dried if necessary to obtain a metal composite hydroxide. Further, if necessary, the reaction precipitate may also be washed with a weak acid solution or an alkaline solution containing sodium hydroxide or potassium hydroxide.

In the case of production of a composite metal oxide as the MCC, the composite metal oxide can be obtained by oxidizing the composite metal hydroxide.

At this time, the oxidation time is preferably set such that the total time from the start of the temperature increase until the holding temperature has been reached and the holding period has been completed is within a range from 2 to 10 hours.

The oxidation temperature is preferably within a range from 500 to 800°C.

During the oxidation, various gases including inert gases such as nitrogen, argon and carbon dioxide, oxidizing gases such as air and oxygen, or mixed gases thereof, may be supplied to the reaction vessel.

The MCC may be classified as appropriate.

[Step of Obtaining LiMO]

The step of obtaining the LiMO includes a mixing step of mixing the MCC and a lithium compound, and a calcining step of calcining the resulting mixture.

- Mixing Step

The MCC and a lithium compound are mixed.

As the lithium compound, at least one of lithium carbonate, lithium nitrate, lithium acetate, lithium hydroxide, lithium hydroxide hydrate, lithium oxide, lithium chloride, and lithium fluoride may be used. Among these, any one of lithium hydroxide, lithium hydroxide hydrate and lithium carbonate, or a mixture thereof, is preferred.

The lithium compound and the MCC are mixed with due consideration of the compositional ratio of the final target product to obtain a mixture containing the lithium compound and the MCC. The amount (molar ratio) of Li relative to the total amount of the Ni and the optional element M0 contained in the MCC is preferably within a range from 0.80 to 1.20, more preferably from 0.90 to 1.10, even more preferably from 0.91 to 1.10, and particularly preferably from 0.92 to 1.10.

- Calcining Step

By calcining the mixture of the MCC and the lithium compound, crystal growth occurs, and the LiMO is obtained. During the calcining process, dry air or an oxygen atmosphere or the like is used depending on the desired composition. In this embodiment of the present invention, the calcining is preferably conducted in an oxygen atmosphere.

The calcining step may include only one calcining, or may include a plurality of calcining stages. In those cases where a plurality of calcining stages are conducted, the step that involves calcining at the highest temperature is deemed the main calcining. A preliminary calcining at a temperature lower than that of the main calcining may be conducted prior to the main calcining. Further a post-calcining at a temperature lower than that of the main calcining may be conducted following the main calcining.

In one embodiment of the present invention, it is preferable that a preliminary calcining of the mixture of the MCC and the lithium compound is conducted first, and the main calcining is then conducted thereafter. Further, both the preliminary calcining and the main calcining are preferably conducted under an oxygen atmosphere.

The calcining temperature during the preliminary calcining is preferably within a range from 600 to 900°C, more preferably from 610 to 850°C, and even more preferably at least 620°C but less than 700°C. Provided the calcining temperature is at least as high as the above lower limit, a LiMO having a strong crystal structure can be obtained. Furthermore, provided the calcining temperature is no higher than the above upper limit, volatilization of lithium ions from the surfaces of the LiMO particles can be reduced.

The calcining temperature during the main calcining is preferably within a range from 600 to 900°C, more preferably from 650 to 850°C, and even more preferably from 700 to 820°C. Provided the calcining temperature is at least as high as the above lower limit, a LiMO having a strong crystal structure can be obtained. Furthermore, provided the calcining temperature is no higher than the above upper limit, volatilization of lithium ions from the surfaces of the LiMO particles can be reduced.

In this description, the "calcining temperature" describes the maximum temperature of the holding temperature of the atmosphere inside the calcining furnace during calcining. In those cases where a plurality of calcinings are conducted, the calcining temperature means the maximum temperature during the calcining stage conducted at the highest temperature.

The calcining furnace used during calcining may employ, for example, either a continuous static calcining furnace or a flow-type calcining furnace. Examples of continuous static calcining furnaces include tunnel furnaces and roller hearth kilns. Examples of the flow-type calcining furnaces include rotary kilns.

The holding times for the preliminary calcining and main calcining are preferably each within a range from 1 to 50 hours, and more preferably from 2 to 20 hours. Provided these holding times are not longer than the above upper limit, volatilization of the lithium ions is suppressed, and any deterioration in the battery performance is inhibited. Provided the holding times are at least as long as the above lower limit, crystal development is promoted, and any deterioration in the battery performance is suppressed.

By adjusting the conditions for the calcining step, the values for the BET specific surface area, the average particle strength, or the standard deviation in the particle strength for the LiMO can be adjusted to values within the respective ranges described above.

- Crushing Step

The calcined product obtained following the above calcining step is crushed using a stone mill grinder (for example, a Masscolloider (a registered trademark)).

For example, a MKCA6-5J apparatus manufactured by Masuko Sangyo Co., Ltd. can be used as the Masscolloider. In the crushing step, crushing is conducted using the stone mill grinder, for example, under conditions including a rotational rate of 800 to 1,500 rpm and a gap of 10 to 1,000 $\mu$m.

By crushing the calcined product using a stone mill grinder, a LiMO that satisfies the above condition (2) can be obtained.

[Optional Steps]

- Washing Step

The crushed product obtained in the above crushing step is preferably washed with a washing liquid such as pure water or an alkaline washing solution.

Examples of the alkaline washing solution include aqueous solutions of one or more anhydrous solutions selected from the group consisting of lithium hydroxide, sodium hydroxide, potassium hydroxide, lithium carbonate, sodium carbonate, potassium carbonate and ammonium carbonate, aqueous solutions of one or more hydrates of these anhydrous compounds, and ammonia.

The temperature of the washing liquid is preferably not more than 20°C, more preferably not more than 15°C, and even more preferably 10°C or lower. By controlling the temperature of the washing liquid to a value not more than the above upper limit, but a temperature at which the washing liquid does not freeze, excessive elution of lithium ions from the crystal structure of the crushed product into the washing liquid during washing can be suppressed.

Washing is preferably conducted using a mass of the washing liquid that is at least twice the mass of the crushed product. Further, if a batch washing process is conducted, then washing is preferably conducted at least twice.

Following washing with a solution other than water, it is preferable that an additional washing is conducted using water to ensure that no compounds derived from the washing solution are retained in the crushed product.

- Drying Step

Following the washing step, the washed crushed product may be dried.

At this time, the drying temperature is preferably within a range from 80 to 250°C, and more preferably from 90 to 230°C. The drying time is preferably within a range from 0.5 to 24 hours, and more preferably from 1 to 10 hours. The drying pressure may be ambient pressure or a reduced pressure.

Performing the steps described above yields the LiMO.

<CAM>

The CAM of an embodiment of the present invention contains the LiMO produced using the method described above.

<Lithium Secondary Battery>

A cathode for a lithium secondary battery suitable for the case where a CAM containing the LiMO of an embodiment of the present invention is used is described below. Hereinafter, the cathode for the lithium secondary battery may sometimes be referred to as simply the cathode.

Moreover, a lithium secondary battery that represents an ideal application of the cathode is also described.

One example of a lithium secondary battery suitable for the case where the CAM of an embodiment of the present invention is used contains a cathode and an anode, a separator sandwiched between the cathode and the anode, and an electrolyte solution disposed between the cathode and the anode.

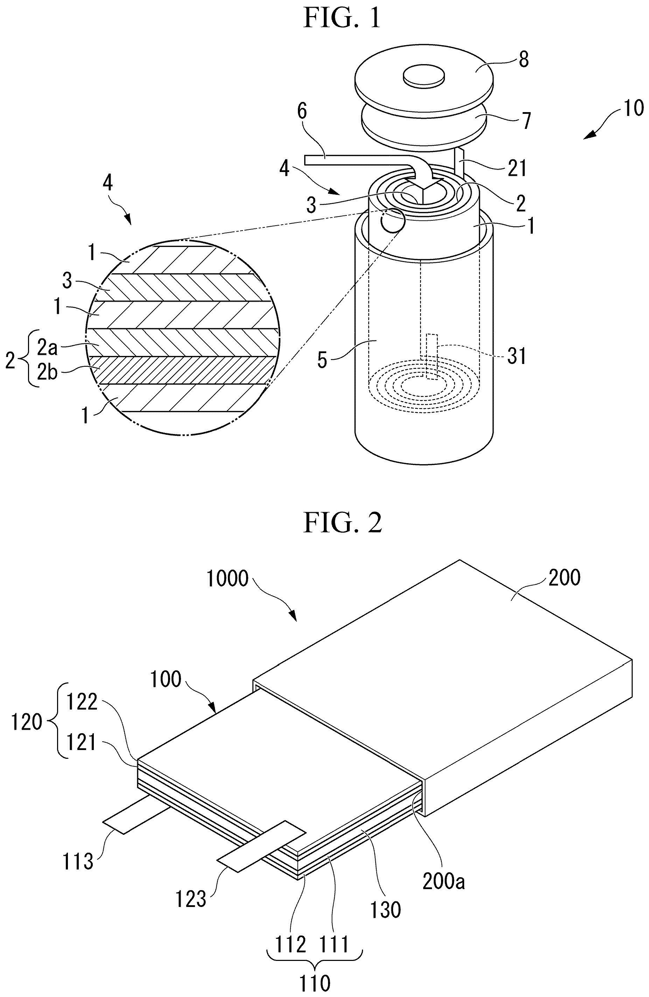

FIG. 1 is a schematic diagram illustrating one example of a lithium secondary battery. For example, a cylindrical lithium secondary battery 10 is produced in the following manner.

First, as illustrated in the partially enlarged view of FIG. 1, a pair of strip-shaped separators 1, a strip-shaped cathode 2 having a cathode lead 21 at one end, and a strip-shaped anode 3 having an anode lead 31 at one end are stacked in the order of separator 1, cathode 2, separator 1, anode 3, and this stacked structure is then wound to form an electrode group 4.

In one example, the cathode 2 has a cathode active material layer 2a containing the CAM and a cathode current collector 2b on one surface of which the cathode active material layer 2a is formed. This type of cathode 2 can be produced by first preparing a cathode mixture containing the CAM, a conductive material and a binder, and then supporting this cathode mixture on one surface of the cathode current collector 2b to form the cathode active material layer 2a.

Examples of the anode 3 include an electrode in which an anode mixture containing an anode active material (not shown in the drawing) is supported on an anode current collector, and an electrode formed solely from a standalone anode active material. This anode 3 can be produced in the same manner as the cathode 2.

Subsequently, the electrode group 4 and an insulator (not shown in the drawing) are housed in a battery can 5, the bottom of the can is sealed, and the electrode group 4 is impregnated with an electrolyte solution 6, thereby disposing the electrolyte between the cathode 2 and the anode 3. Production of a lithium secondary battery 10 can then be completed by subsequently sealing the top of the battery can 5 with a top insulator 7 and a sealing body 8.

Examples of the shape of the electrode group 4 include columnar shapes which, when cut perpendicularly to the winding axis of the electrode group 4, have a cross-sectional shape that is circular, elliptical, rectangular, or rectangular with rounded corners.

Further, the shape of the lithium secondary battery having this type of electrode group 4 may employ any shape prescribed in IEC 60086, a standard for batteries established by the International Electrotechnical Commission (IEC), or any shape prescribed in JIS C 8500. Examples of these shapes include cylindrical shapes and rectangular shapes.

Moreover, the lithium secondary battery is not limited to the wound configuration described above, and may also have a laminated configuration in which a laminated structure of a cathode, a separator, an anode and a separator is stacked in a repeating arrangement. Examples of such laminated lithium secondary batteries include so-called coin batteries, button batteries, and paper (or sheet) batteries.

Regarding the cathode, separator, anode and electrolyte solution that constitute the lithium secondary battery, for example, the configurations, materials and production methods disclosed in paragraphs [0113] to [0140] of WO2022/113904A1 may be used.

<All-Solid-State Lithium Secondary Battery>

The CAM of an embodiment of the present invention can also be used as the CAM of an all-solid-state lithium secondary battery.

FIG. 2 is a schematic diagram illustrating one example of an all-solid-state lithium secondary battery. The all-solid-state lithium secondary battery 1000 illustrated in FIG. 2 contains a laminate 100 having a cathode 110, an anode 120 and a solid electrolyte layer 130, and an external case 200 that houses the laminate 100. Further, the all-solid-state lithium secondary battery 1000 may also have a bipolar structure in which a CAM and an anode active material are disposed on the two sides of a current collector. One specific example of a bipolar structure is the structure disclosed in JP-A-2004-95400.

The cathode 110 has a cathode active material layer 111 and a cathode current collector 112. The cathode active material layer 111 contains the CAM described above and the solid electrolyte. Further, the cathode active material layer 111 may also contain a conductive material and a binder.

The anode 120 has an anode active material layer 121 and an anode current collector 122. The anode active material layer 121 contains an anode active material. Further, the anode active material layer 121 may also contain a solid electrolyte and a conductive material.

The laminate 100 may have an external terminal 113 connected to the cathode current collector 112 and an external terminal 123 connected to the anode current collector 122. In addition, the all-solid-state lithium secondary battery 1000 may have a separator between the cathode 110 and the anode 120.

The all-solid-state lithium secondary battery 1000 also has an insulator (not shown in the drawing) that insulates the laminate 100 from the external case 200, and a sealing body (not shown in the drawing) that seals the opening 200a of the external case 200.

A container molded from a metal material with superior corrosion resistance such as aluminum, stainless steel, or nickel-plated steel may be used as the external case 200. Alternatively, a container formed from a laminate film that has been subjected to a corrosion resistance treatment on at least one surface and then processed into a bag shape may also be used as the external case 200.

Examples of the shape of the all-solid-state lithium secondary battery 1000 include coin-type, button-type, paper (or sheet-type), cylindrical, square, and laminate-type (pouch-type) shapes.

The all-solid-state lithium secondary battery 1000 is illustrated using a configuration having a single laminate 100 as one example, but embodiments of the present invention are not limited to this particular configuration. The all-solid-state lithium secondary battery 1000 may also have a configuration in which the laminate 100 acts as a unit cell, and a plurality of these unit cells (laminates 100) are housed inside the external case 200.

Regarding the all-solid-state lithium secondary battery, for example, the configurations, materials and production methods disclosed in paragraphs [0151] to [0181] of WO2022/113904A1 may be used.

In lithium secondary batteries having the types of configurations described above, because the CAM described above is used, a lithium secondary battery having superior cycle characteristics can be provided.

Further, because a cathode of the configuration described above uses the CAM of the composition described above, the cycle characteristics of the lithium secondary battery are superior.

Moreover, because lithium secondary batteries having the types of configurations described above have the cathode described above, the cycle characteristics are superior.

Examples of suitable embodiments according to the present invention have been described above with reference to the appended drawings, but the present invention is not limited to these examples. The shapes and combinations of the various constituent members described in the above examples are merely examples, and various modifications based on the design requirements and the like can be made without departing from the scope of the present invention.

[Examples]

Next, the present invention is described in further detail using a series of examples.

<Measurement of Various Parameters>

Measurements of various parameters of the LiMO produced using the methods described below were conducted using the measurement methods and the like described above in the sections entitled [Method for Confirming Crystal Structure], [Compositional Analysis], [Method for Acquiring $I_A/I_B$], [Measurement of BET Specific Surface Area], [Measurement of $D_{10}$, $D_{90}$ and $D_{50}$], [Method for Measuring Average Particle Strength] and [Method for Measuring Standard Deviation in Particle Strength].

<Method for Measuring Cycle Retention Rate >

The cycle retention rate of lithium secondary batteries produced using the method described above was measured in accordance with the method disclosed above in the section entitled [Method for Measuring Cycle Retention Rate].

<Example 1>

A reaction vessel fitted with a stirrer and an overflow pipe was charged with water, an aqueous sodium hydroxide solution was then added, and the liquid temperature (reaction temperature) was held at 50°C.

A raw material solution 1 was prepared by mixing an aqueous solution of nickel sulfate, an aqueous solution of manganese sulfate, and an aqueous solution of aluminum sulfate in amounts that yielded an atomic ratio between Ni, Mn and Al of 93:1:6.

Subsequently, a calcium hydroxide aqueous solution with a concentration of 0.1% by weight, a magnesium sulfate aqueous solution with a concentration of 0.1% by weight, a sodium silicate aqueous solution with a concentration of 0.1% by weight, an iron chloride aqueous solution with a concentration of 0.1% by weight, and a cobalt sulfate aqueous solution with a concentration of 0.1% by weight were added to the raw material solution 1 in amounts such that (Si+Na+Ca)/Co=4.29, (Si+Fe+Mg+Na+Ca+Co) / (Ni+Mn+Al)=1,680 ppm, Si/Na=6.61, and Si/Ca=69.18, thus obtaining a mixed raw material solution 1.

Next, an aqueous solution of ammonium sulfate as a complexing agent was added continuously to the mixed raw material solution 1 in the reaction vessel under constant stirring. An aqueous solution of sodium hydroxide was then added dropwise as appropriate to adjust the pH of the mixed solution inside the reaction vessel to 12.1 (at a liquid temperature of 40°C), thus obtaining a reaction precipitate 1.

The obtained reaction precipitate 1 was washed and then dried at 105°C for 20 hours, yielding a metal composite hydroxide MCC1.

The MCC1 and a lithium hydroxide monohydrate powder were weighed and mixed to achieve a ratio of Li/(Ni+Mn+Al)=1.03, thus obtaining a mixture 1.

Subsequently, the mixture 1 was subjected to preliminary calcining under an oxygen atmosphere at 650°C for 5 hours.

A main calcining was then conducted under an oxygen atmosphere at 750°C for 5 hours, yielding a calcined product 1.

The thus obtained calcined product 1 was crushed using a Masscolloider, thus obtaining a crushed product 1. The operating conditions for the Masscolloider and the apparatus used were as follows.

(Masscolloider Operating Conditions)

Apparatus used: MKCA6-5J manufactured by Masuko Sangyo Co., Ltd.

Rotational rate: 1,200 rpm
Gap: 100 μm

A slurry was prepared by mixing the crushed product 1 with pure water that had been adjusted to a liquid temperature of 5°C in an amount that yielded a mass percentage of the crushed product 1 of 0.5 relative to the total mass, and the slurry was stirred for 20 minutes.

Subsequently, the slurry was dewatered and then dried under a nitrogen atmosphere at 210°C for 10 hours, yielding a LiMO-1 having a layered structure. The LiMO-1 had a composition represented by the compositional formula (A), wherein x=0.99, y=0.93, s=0.064, z+t+u=0.005, M0 represents Mn and Al, M1 represents Si, Ca and Na, and M2 represents Fe and Mg.

The composition of LiMO-1, and the values for $I_A/I_B$, BET specific surface area, $D_{50}$, $(D_{90}-D_{10})/D_{50}$, average particle strength, standard deviation in the particle strength, and cycle retention rate are shown in Table 1. The same values for the subsequent examples and comparative examples described below are also shown in Table 1.

<Example 2>

A reaction vessel fitted with a stirrer and an overflow pipe was charged with water, an aqueous sodium hydroxide solution was then added, and the liquid temperature (reaction temperature) was held at 50°C.

A raw material solution 2 was prepared by mixing an aqueous solution of nickel sulfate, an aqueous solution of manganese sulfate, and an aqueous solution of aluminum sulfate in amounts that yielded an atomic ratio between Ni, Mn and Al of 93:3.5:3.5.

Subsequently, a calcium hydroxide aqueous solution with a concentration of 0.1% by weight, a magnesium sulfate aqueous solution with a concentration of 0.1% by weight, a sodium silicate aqueous solution with a concentration of 0.1% by weight, an iron chloride aqueous solution with a concentration of 0.1% by weight, and a cobalt sulfate aqueous solution with a concentration of 0.1% by weight were added to the raw material solution 2 in amounts such that (Si+Na+Ca)/Co=0.65, (Si+Fe+Mg+Na+Ca+Co) / (Ni+Mn+Al)=758 ppm, Si/Na=1.80, and Si/Ca=15.69, thus obtaining a mixed raw material solution 2.

With the exceptions of using the mixed raw material solution 2, and altering the temperature during the main calcining to 770°C, a LiMO-2 having a layered structure was obtained in the same manner as Example 1. The LiMO-2 had a composition represented by the compositional formula (A), wherein x=0.95, y=0.93, s=0.066, z+t+u=0.0017, M0 represents Mn and Al, M1 represents Si, Ca and Na, and M2 represents Fe and Mg.

<Example 3>

A calcium hydroxide aqueous solution with a concentration of 0.1% by weight, a magnesium sulfate aqueous solution with a concentration of 0.1% by weight, a sodium silicate aqueous solution with a concentration of 0.1% by weight, an iron chloride aqueous solution with a concentration of 0.1% by weight, and a cobalt sulfate aqueous solution with a concentration of 0.1% by weight were added to the above raw material solution 2 in amounts such that (Si+Na+Ca)/Co=0.07, (Si+Fe+Mg+Na+Ca+Co) / (Ni+Mn+Al)=6,197 ppm, Si/Na=0.92, and Si/Ca=12.84, thus obtaining a mixed raw material solution 3.

Next, an aqueous solution of ammonium sulfate as a complexing agent was added continuously to the mixed raw material solution 3 in the reaction vessel under constant stirring. An aqueous solution of sodium hydroxide was then added dropwise as appropriate to adjust the pH of the mixed solution inside the reaction vessel to 12.1 (at a liquid temperature of 40°C), thus obtaining a reaction precipitate 3.

The obtained reaction precipitate 3 was washed and then dried at 105°C for 20 hours, yielding a metal composite hydroxide MCC3.

The MCC3 and a lithium hydroxide monohydrate powder were weighed and mixed to achieve a ratio of Li/(Ni+Al+Mn)=1.05, thus obtaining a mixture 3.

With the exception of using the mixture 3, a LiMO-3 having a layered structure was obtained in the same manner as Example 1. The LiMO-3 had a composition represented by the compositional formula (A), wherein x=0.98, y=0.92, s=0.073, z+t+u=0.0011, M0 represents Mn and Al, M1 represents Si, Ca and Na, and M2 represents Fe and Mg.

<Example 4>

A calcium hydroxide aqueous solution with a concentration of 0.1% by weight, a magnesium sulfate aqueous solution with a concentration of 0.1% by weight, a sodium silicate aqueous solution with a concentration of 0.1% by weight, an iron chloride aqueous solution with a concentration of 0.1% by weight, and a cobalt sulfate aqueous solution with a concentration of 0.1% by weight were added to the above raw material solution 2 in amounts such that (Si+Na+Ca)/Co=0.73, (Si+Fe+Mg+Na+Ca+Co) / (Ni+Mn+Al)=588 ppm, Si/Na=0.95, and Si/Ca=9.98, thus obtaining a mixed raw material solution 4.

With the exception of using the mixed raw material solution 4, a LiMO-4 having a layered structure was obtained in the same manner as Example 1. The LiMO-4 had a composition represented by the compositional formula (A), wherein x=0.99, y=0.94, s=0.064, z+t+u=0.0013, M0 represents Mn and Al, M1 represents Si, Ca and Na, and M2 represents Fe and Mg.

<Example 5>

A calcium hydroxide aqueous solution with a concentration of 0.1% by weight, a magnesium sulfate aqueous solution with a concentration of 0.1% by weight, a sodium silicate aqueous solution with a concentration of 0.1% by weight, an iron chloride aqueous solution with a concentration of 0.1% by weight, and a cobalt sulfate aqueous solution with a concentration of 0.1% by weight were added to the above raw material solution 2 in amounts such that (Si+Na+Ca)/Co=0.67, (Si+Fe+Mg+Na+Ca+Co) / (Ni+Mn+Al)=570 ppm, Si/Na=1.64, and Si/Ca=11.41, thus obtaining a mixed raw material solution 5.

With the exception of using the mixed raw material solution 5, a LiMO-5 having a layered structure was obtained in the same manner as Example 1. The LiMO-5 had a composition represented by the compositional formula (A), wherein x=1.00, y=0.93, s=0.066, z+t+u=0.0013, M0 represents Mn and Al, M1 represents Si, Ca and Na, and M2 represents Fe and Mg.

EP 4 699 982 A1

<Comparative Example 1>

A calcium hydroxide aqueous solution with a concentration of 0.1% by weight, a magnesium sulfate aqueous solution with a concentration of 0.1% by weight, a sodium silicate aqueous solution with a concentration of 0.1% by weight, an iron chloride aqueous solution with a concentration of 0.1% by weight, and a cobalt sulfate aqueous solution with a concentration of 0.1% by weight were added to the above raw material solution 2 in amounts such that (Si+Na+Ca)/Co=8.34, (Si+Fe+Mg+Na+Ca+Co) / (Ni+Mn+Al)=3,758 ppm, Si/Na=1.80, and Si/Ca=0.05, thus obtaining a mixed raw material solution 6.

Next, an aqueous solution of ammonium sulfate as a complexing agent was added continuously to the mixed raw material solution 6 in the reaction vessel under constant stirring. An aqueous solution of sodium hydroxide was then added dropwise as appropriate to adjust the pH of the mixed solution inside the reaction vessel to 12.1 (at a liquid temperature of 40°C), thus obtaining a reaction precipitate 6.

The obtained reaction precipitate 6 was washed and then dried at 105°C for 20 hours, yielding a metal composite hydroxide MCC6.

The MCC6 and a lithium hydroxide monohydrate powder were weighed and mixed to achieve a ratio of Li/(Ni+Mn+Al)=1.15, thus obtaining a mixture 6.

Subsequently, the mixture 6 was subjected to preliminary calcining under an oxygen atmosphere at 650°C for 5 hours.

A main calcining was then conducted under an oxygen atmosphere at 770°C for 5 hours, yielding a calcined product 6.

With the exception of using the calcined product 6, a LiMO-6 having a layered structure was obtained in the same manner as Example 1. The LiMO-6 had a composition represented by the compositional formula (A), wherein x=1.02, y=0.93, s=0.055, z+t+u=0.0091, M0 represents Mn and Al, M1 represents Si, Ca and Na, and M2 represents Fe and Mg.

<Comparative Example 2>

A calcium hydroxide aqueous solution with a concentration of 0.1% by weight, a magnesium sulfate aqueous solution with a concentration of 0.1% by weight, a sodium silicate aqueous solution with a concentration of 0.1% by weight, an iron chloride aqueous solution with a concentration of 0.1% by weight, and a cobalt sulfate aqueous solution with a concentration of 0.1% by weight were added to the above raw material solution 2 in amounts such that (Si+Na+Ca)/Co=0.03, (Si+Fe+Mg+Na+Ca+Co) / (Ni+Mn+Al)=13,196 ppm, Si/Na=13.09, and Si/Ca=22.82, thus obtaining a mixed raw material solution 7.

With the exception of using the mixed raw material solution 7, a LiMO-7 having a layered structure was obtained in the same manner as Example 3. The LiMO-7 had a composition represented by the compositional formula (A), wherein x=1.02, y=0.94, s=0.034, z+t+u=0.023, M0 represents Mn and Al, M1 represents Si, Ca and Na, and M2 represents Fe and Mg.

<Comparative Example 3>

A calcium hydroxide aqueous solution with a concentration of 0.1% by weight, a magnesium sulfate aqueous solution with a concentration of 0.1% by weight, a sodium silicate aqueous solution with a concentration of 0.1% by weight, an iron chloride aqueous solution with a concentration of 0.1% by weight, and a cobalt sulfate aqueous solution with a concentration of 0.1% by weight were added to the above raw material solution 2 in amounts such that (Si+Na+Ca)/Co=117.92, (Si+Fe+Mg+Na+Ca+Co) / (Ni+Mn+Al)=130 ppm, Si/Na=1.39, and Si/Ca=3.47, thus obtaining a mixed raw material solution 8.

Next, an aqueous solution of ammonium sulfate as a complexing agent was added continuously to the mixed raw material solution 8 in the reaction vessel under constant stirring. An aqueous solution of sodium hydroxide was then added dropwise as appropriate to adjust the pH of the mixed solution inside the reaction vessel to 12.1 (at a liquid temperature of 40°C), thus obtaining a reaction precipitate 8.

The obtained reaction precipitate 8 was washed and then dried at 105°C for 20 hours, yielding a metal composite hydroxide MCC8.

The MCC8 and a lithium hydroxide monohydrate powder were weighed and mixed to achieve a ratio of Li/(Ni+Mn+Al)=1.03, thus obtaining a mixture 8.

Subsequently, the mixture 8 was subjected to preliminary calcining under an oxygen atmosphere at 650°C for 5 hours.

A main calcining was then conducted under an oxygen atmosphere at 750°C for 5 hours, yielding a calcined product 8.

The obtained calcined product 8 was crushed in a mortar, yielding a crushed product 8.

With the exception of using the crushed product 8, a LiMO-8 having a layered structure was obtained in the same manner as Example 1. The LiMO-8 had a composition represented by the compositional formula (A), wherein x=1.00, y=0.94, s=0.061, z+t+u=0.0004, M0 represents Mn and Al, M1 represents Si, Ca and Na, and M2 represents Fe and Mg.

<Comparative Example 4>

A reaction vessel fitted with a stirrer and an overflow pipe was charged with water, an aqueous sodium hydroxide solution was then added, and the liquid temperature (reaction temperature) was held at 50°C.

A raw material solution 4 was prepared by mixing an aqueous solution of nickel sulfate, an aqueous solution of manganese sulfate, and an aqueous solution of aluminum sulfate in amounts that yielded an atomic ratio between Ni, Mn and Al of 93:6:1.

Subsequently, a calcium hydroxide aqueous solution with a concentration of 0.1% by weight, a magnesium sulfate aqueous solution with a concentration of 0.1% by weight, a sodium silicate aqueous solution with a concentration of 0.1% by weight, an iron chloride aqueous solution with a concentration of 0.1% by weight, and a cobalt sulfate aqueous solution with a concentration of 0.1% by weight were added to the raw material solution 4 in amounts such that (Si+Na+Ca)/Co=1.23, (Si+Fe+Mg+Na+Ca+Co) / (Ni+Mn+Al)=925 ppm, Si/Na=0.35, and Si/Ca=12.84, thus obtaining a mixed raw material solution 9.

Next, an aqueous solution of ammonium sulfate as a complexing agent was added continuously to the mixed raw material solution 9 in the reaction vessel under constant stirring. An aqueous solution of sodium hydroxide was then added dropwise as appropriate to adjust the pH of the mixed solution inside the reaction vessel to 12.1 (at a liquid temperature of 40°C), thus obtaining a metal composite hydroxide 9.

The thus obtained metal composite hydroxide 9 was washed and then dried at 105°C for 20 hours, yielding a metal composite hydroxide MCC9.

The MCC9 and a lithium hydroxide monohydrate powder were weighed and mixed to achieve a ratio of Li/(Ni+Mn+Al)=1.05, thus obtaining a mixture 9.

With the exceptions of using the mixture 9, and altering the temperature during the main calcining to 770°C, a LiMO-9 having a layered structure was obtained in the same manner as Comparative Example 3. The LiMO-9 had a composition represented by the compositional formula (A), wherein x=1.02, y=0.93, s=0.067, z+t+u=0.0023, M0 represents Mn and Al, M1 represents Si, Ca and Na, and M2 represents Fe and Mg.

<Comparative Example 5>

A calcium hydroxide aqueous solution with a concentration of 0.1% by weight, a magnesium sulfate aqueous solution with a concentration of 0.1% by weight, a sodium silicate aqueous solution with a concentration of 0.1% by weight, an iron chloride aqueous solution with a concentration of 0.1% by weight, and a cobalt sulfate aqueous solution with a concentration of 0.1% by weight were added to the above raw material solution 2 in amounts such that (Si+Na+Ca)/Co=0.64, (Si+Fe+Mg+Na+Ca+Co) / (Ni+Mn+Al)=752 ppm, Si/Na=1.80, and Si/Ca=39.22, thus obtaining a mixed raw material solution 10.

With the exception of using the mixed raw material solution 10, a LiMO-10 having a layered structure was obtained in the same manner as Comparative Example 3. The LiMO-10 had a composition represented by the compositional formula (A), wherein x=0.98, y=0.93, s=0.064, z+t+u=0.0016, M0 represents Mn and Al, M1 represents Si, Ca and Na, and M2 represents Fe and Mg.

[Table 1]

| | Si/Na | Si/Ca | M1/Co | M1+M2+Co | $I_A/I_B$ | BET specific surface area | $D_{50}$ | $(D_{90}-D_{10})/D_{50}$ | Average particle strength | Particle strength standard deviation | Cycle retention rate |
|---|---|---|---|---|---|---|---|---|---|---|---|
| | - | - | - | ppm | - | $m^2/g$ | $\mu m$ | | MPa | % | % |
| Example 1 | 6.6 | 69.2 | 4.3 | 1680 | 0.57 | 1.4 | 13.8 | 1.1 | 32.3 | 15.5 | 82.8 |
| Example 2 | 1.8 | 15.7 | 0.7 | 758 | 0.54 | 1.3 | 13.5 | 1.0 | 34.6 | 15.9 | 82.2 |
| Example 3 | 0.9 | 12.8 | 0.07 | 6197 | 0.59 | 1.4 | 11.3 | 1.2 | 22.0 | 17.7 | 80.2 |
| Example 4 | 1.0 | 10.0 | 0.7 | 588 | 0.73 | 1.2 | 14.2 | 1.1 | 40.7 | 23.9 | 80.6 |
| Example 5 | 1.6 | 11.4 | 0.7 | 570 | 0.69 | 1.1 | 17.1 | 0.7 | 42.6 | 15.4 | 80.3 |
| Comparative Example 1 | 1.8 | 0.05 | 8.3 | 3758 | 0.61 | 1.1 | 19.1 | 1.1 | 36.9 | 18.7 | 69.4 |
| Comparative Example 2 | 13.1 | 22.8 | 0.03 | 13,196 | 0.53 | 1.4 | 13.0 | 1.2 | 30.1 | 13.0 | 78.5 |
| Comparative Example 3 | 1.4 | 3.5 | 117.9 | 130 | 0.84 | 0.5 | 25.2 | 5.9 | 8.2 | 81.4 | 63.2 |
| Comparative Example 4 | 0.4 | 12.8 | 1.2 | 925 | 0.78 | 1.2 | 16.5 | 1.0 | 55.7 | 102.0 | 74.8 |
| Comparative Example 5 | 1.8 | 39.2 | 0.6 | 752 | 0.45 | 1.0 | 16.2 | 0.9 | 52.3 | 56.0 | 76.6 |

EP 4 699 982 A1

As illustrated in Table 1 above, Examples 1 to 5 which satisfied the above conditions (1) and (2) all exhibited a cycle retention rate of 80% or higher, indicating favorable cycle characteristics.

In contrast, Comparative Examples 1 and 2 which did not satisfy the above condition (1), Comparative Examples 4 and 5 which did not satisfy the above condition (2), and Comparative Example 3 which did not satisfy either of the conditions (1) and (2), all exhibited cycle retention rates of less than 80%.

[Reference Signs List]

1 Separator
2 Cathode
2a Cathode active material layer
2b Cathode current collector layer
3 Anode
4 Electrode group
5 Battery can
6 Electrolyte solution
7 Top insulator
8 Sealing body
10 Lithium secondary battery
21 Cathode lead
31 Anode lead
100 Laminate
110 Cathode
111 Cathode active material layer
112 Cathode current collector
113 External terminal
120 Anode
121 Anode active material layer
122 Anode current collector
123 External terminal
130 Solid electrolyte layer
200 External case
200a Opening
1000 All-solid-state lithium secondary battery

**Claims**

1.  A lithium metal composite oxide having a layered structure, and satisfying (1) and (2) shown below:

    (1) the lithium metal composite oxide comprises Co, an element M1 and an element M2, wherein a molar ratio of the element M1 relative to Co is at least 0.05 but not more than 6, the element M1 is one or more elements selected from the group consisting of Si, Ca and Na, and the element M2 is one or more elements selected from the group consisting of Fe and Mg;
    (2) in powder X-ray diffraction measurements using CuK$\alpha$ radiation, two diffraction peaks exist within a range of $2\theta = 38.0\pm0.5°$, and of those two peaks, if a diffraction peak on a lower angle side is deemed peak A and a diffraction peak on a higher angle side is deemed peak B, then a formula shown below is satisfied:

$$0.50 \leq I_A/I_B \leq 0.75 \qquad \text{... Formula}$$

    (wherein $I_A$ represents a peak area of the peak A, and $I_B$ represents a peak area of the peak B).

2.  The lithium metal composite oxide according to Claim 1, wherein a total mass of Co, the element M1 and the element M2 contained in the lithium metal composite oxide is not more than 12,000 ppm.

3.  The lithium metal composite oxide according to Claim 1 or 2, wherein the element M1 includes Ca and Si, and a molar ratio of Si relative to Ca is 8 or greater.

4. The lithium metal composite oxide according to Claim 1 or 2, wherein the element M1 includes Na and Si, and a molar ratio of Si relative to Na is 0.5 or greater.

5. The lithium metal composite oxide according to Claim 1 or 2, having a BET specific surface area of at least $1.0\ m^2/g$ but not more than $2.0\ m^2/g$.

6. The lithium metal composite oxide according to Claim 1 or 2, wherein $D_{10}$, $D_{50}$ and $D_{90}$ satisfy formula (I) shown below:

$$0.5 \leq (D_{90}\text{-}D_{10})/D_{50} \leq 1.5 \qquad \text{Formula (I)}$$

(wherein $D_{10}$ represents a 10% cumulative volume particle size of the lithium metal composite oxide, $D_{50}$ represents a 50% cumulative volume particle size of the lithium metal composite oxide, and $D_{90}$ represents a 90% cumulative volume particle size of the lithium metal composite oxide).

7. The lithium metal composite oxide according to Claim 1 or 2, wherein an average particle strength of the lithium metal composite oxide is 20 MPa or greater.

8. The lithium metal composite oxide according to Claim 1 or 2, wherein a standard deviation in a particle strength of the lithium metal composite oxide is not more than 40%.

9. A cathode active material for a lithium secondary battery, comprising the lithium metal composite oxide according to Claim 1 or 2.

10. A cathode for a lithium secondary battery, comprising the cathode active material for a lithium secondary battery according to Claim 9.

11. A lithium secondary battery having the cathode for a lithium secondary battery according to Claim 10.

EP 4 699 982 A1

# FIG. 1

# FIG. 2

## INTERNATIONAL SEARCH REPORT

| International application No. |
|---|
| **PCT/JP2024/010408** |

| | |
|---|---|
| **A.** | **CLASSIFICATION OF SUBJECT MATTER** |
| | ***C01B 33/26***(2006.01)i; ***H01M 4/525***(2010.01)i |
| | FI: C01B33/26; H01M4/525 |

According to International Patent Classification (IPC) or to both national classification and IPC

| | |
|---|---|
| **B.** | **FIELDS SEARCHED** |

Minimum documentation searched (classification system followed by classification symbols)

C01B33/26; H01M4/525

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | CN 113839012 A (NINGDE AMPEREX TECHNOLOGY LTD.) 24 December 2021 (2021-12-24) <br> entire text, all drawings | 1-11 |
| A | JP 2013-32253 A (TAIHEIYO CEMENT CORPORATION) 14 February 2013 (2013-02-14) <br> entire text, all drawings | 1-11 |
| A | JP 2011-14445 A (SHARP KABUSHIKI KAISHA) 20 January 2011 (2011-01-20) <br> entire text, all drawings | 1-11 |
| A | JP 2014-120324 A (TAIHEIYO CEMENT CORPORATION) 30 June 2014 (2014-06-30) <br> entire text, all drawings | 1-11 |
| A | JP 9-274917 A (MATSUSHITA ELECTRIC INDUSTRIAL CO., LTD.) 21 October 1997 (1997-10-21) <br> entire text, all drawings | 1-11 |

☐ Further documents are listed in the continuation of Box C.  ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **24 May 2024** | **04 June 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

| INTERNATIONAL SEARCH REPORT | International application No. |
| :---: | :--- |
| Information on patent family members | **PCT/JP2024/010408** |

| Patent document cited in search report | | | Publication date (day/month/year) | Patent family member(s) | | | Publication date (day/month/year) |
| :--- | :--- | :--- | :--- | :--- | :--- | :--- | :--- |
| CN | 113839012 | A | 24 December 2021 | US | 2023/0118096 | A1 | |
| | | | | entire text, all drawings | | | |
| | | | | WO | 2021/249400 | A1 | |
| JP | 2013-32253 | A | 14 February 2013 | (Family: none) | | | |
| JP | 2011-14445 | A | 20 January 2011 | (Family: none) | | | |
| JP | 2014-120324 | A | 30 June 2014 | (Family: none) | | | |
| JP | 9-274917 | A | 21 October 1997 | US | 5631105 | A | |
| | | | | entire text, all drawings | | | |
| | | | | EP | 744780 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023067359 A
- JP 2013112531 A
- JP 2002201028 A
- WO 2022113904 A1
- JP 2004095400 A

**Non-patent literature cited in the description**

- *Journal of the Mining Industry of Japan*, 1965, vol. 81